# FASCICULE DE BREVET EUROPEEN

(11) **EP 0 465 749 B1**
(45) Date de publication et mention de la délivrance du brevet: **15.03.1995**
(21) Numéro de dépôt: 90420326.2
(22) Date de dépôt: 10.07.1990
(51) Int. Cl.: C02F 1/48

(54) **Procédé physique de prévention et de suppression des dépôts incrustants en milieu liquide**
Physikalisches Verfahren zur Verhinderung und Entfernung von Inkrustationen in Flüssigkeiten
Physical method for the prevention and elimination of scale in a liquid media

(43) Date de publication de la demande: 15.01.1992
(73) Titulaire: RIME SA, F-26120 Chabeuil (FR)
(72) Inventeur: Gauthier, Michel, F-26120 Chabeuil (FR)
(74) Mandataire: Rodhain, Claude

(56) Documents cités:
- FR-A- 613 655
- FR-A- 2 643 651
- GB-A- 236 534
- US-A- 3 801 482
- BE-A 901 884
- EP-A 357 102
- WO-A 88 05763

## Description

La présente invention concerne un procédé physique de traitement des liquides, par action de champs électriques ou électriques et magnétiques sur les ions et particules susceptibles de conduire à des dépôts incrustants sur les parois en contact avec ce liquide.

Le procédé permet en particulier d'éviter le dépôt de tartre dans les canalisations, les installations, ou tout autre endroit immergé, et d'éliminer progressivement le tartre existant.

On connaît déjà des dispositifs de traitement électrique de l'eau selon lesquels l'eau circule dans une canalisation de matériau quelconque sur laquelle on a entouré deux bobinages, ou antennes, portés chacun à un certain niveau de tension et visant à provoquer dans la veine d'eau des ondes de fréquence radio. Le mode d'action de ces ondes sur le processus d'entartrage est différemment expliqué selon les auteurs. Tous ces procédés présentent les trois inconvénients majeurs suivants :
1) L'onde de fréquence radio reçue par la veine d'eau dépend de l'installation à protéger, et peut être totalement inexistante si la canalisation est métallique et reliée à la terre, formant une cage de Faraday imperméable aux ondes.
2) L'onde de fréquence radio appliquée à la veine d'eau ne traite que partiellement les éléments susceptibles d'incruster les installations, et le tartre dissous, non totalement traité, continu à déposer lorsque les conditions d'entartrage sont dure (forte élévation de température ou forte sur oxygénation par exemple).
3) L'onde de fréquence radio émise dans les bobinages réalisés autour des canalisations provoque un processus d'entartrage privilégié de la canalisation au droit de ces bobinages.

Le préambule de la revendication 1 est connu de la demande de brevet BE-A-901 884. Selon cette antériorité, les enroulements ou les plaques occupent toute la zone qui est le siège d'un champ impulsionnel, ce qui fait que c'est la totalité de la zone qui peut être le siège du phénomène d'entartrage privilégié.

La demande de brevet EP-A-357 102 concerne une activation par un signal sinusoïdal (et non impulsionnel) et dans lequel l'action magnétique est prépondérante. Si ce mode de fonctionnement permet d'éviter un entartrage privilégié, la production du champ magnétique nécessite un nombre d'ampères-tours très élevé.

L'invention supprime le second inconvénient cité ci-dessus et en partie le troisième inconvénient en proposant, selon la revendication 1, une façon optimale d'appliquer les ondes de champ électrique au liquide à traiter en créant au minimum deux zones consécutives dans lesquelles le liquide est amené à circuler.

Chaque zone est le siège soit d'un champ électrique impulsionnel soit d'un champ magnétique, avec au minimum une zone de champ électrique impérativement. Dans la première zone traversée par le liquide, l'énergie apportée par application du champ impulsionnel aux ions et particules chargées qui y circulent est utilisée pour former des germes de cristallisation.

Dans la seconde zone, l'énergie supplémentaire apportée permet aux germes de grossir très rapidement par captation d'ions ou autres particules chargées électriquement. Cette croissance nécessite beaucoup moins d'énergie que la phase de fabrication des germes car ceux-ci constituent des sites privilégiés de précipitation, agissant en catalyseurs. Le traitement est donc très complet lorsque l'eau quitte la seconde zone de champ.

L'invention supprime l'inconvénient 1 en proposant, selon la revendication 3, un dispositif appliquant un champ électrique impulsionnel au liquide à travers une chambre constituée d'un matériau électriquement isolant (voir WO 88105763) ; en effet, cette chambre, même lorsqu'elle est raccordée à un réseau de tuyauteries et appareillages eux-mêmes reliés à la terre, est toujours traversée par la totalité du champ électrique émis à sa périphérie.

Le procédé ne dépend donc aucunement du niveau de potentiel que l'on peut trouver sur les tuyauteries et appareillages : courants de fuite, électricité statique ou autres.

Les figures 1, 2, 3 montrent divers cas possibles de matérialisation du procédé, le champ électrique étant établi entre les enroulements, plaques ou autres moyens repérés "U" et "O", le champ magnétique étant établi entre pôles N et S.

La figure 1 représente le cas de deux zones d'induction de champ électrique repérées 2 et 3, dans une chambre tubulaire repérée 1.

La figure 2 représente le cas de quatre zones d'induction de champ électrique, repérées 4, 5, 6 et 7, dans une chambre tubulaire repérée 1.

La figure 3 représente le cas d'une zone 8 dans laquelle est induit un champ électrique, associé à une zone 9 dans laquelle est induit un champ magnétique.

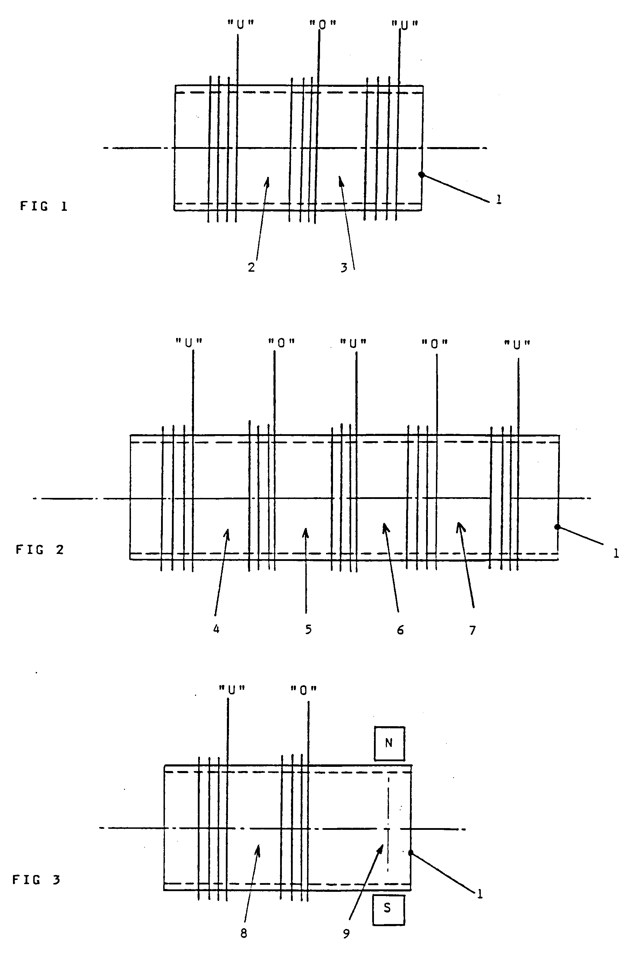

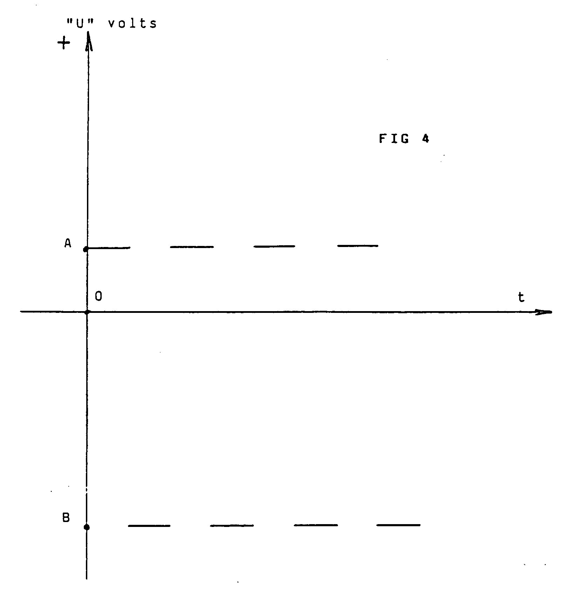

L'invention supprime le troisième inconvénient cité, en proposant un dispositif d'alimentation électrique asymétrique des enroulements repérés "U" sur les figures 1, 2, 3, selon la figure 4 par exemple. L'amplitude A du signal est de l'ordre de quelques volts, l'amplitude B est de quelques dizaines de volts, et la fréquence des signaux peut être de quelques KHz.

Ce changement de sens et d'amplitude du champ électrique généré provoque la répulsion des ions et particules chargées électriquement de la zone de la chambre où est bobiné l'enroulement repéré "U", évitant ainsi le colmatage de cette zone.

## Revendications

1. Procédé physique de traitement des milieux liquides susceptibles de générer des dépôts incrustants, procédé selon lequel un liquide circule au moins dans deux zones (2, 3, 4, 5, 6, 7, 8, 9) consécutives d'une chambre (1), au moins une zone (2, 3, 4, 5, 6, 7, 8) étant le siège d'un champ impulsionnel induit, caractérisé en ce qu'au moins une dite zone (2, 3, 4, 5, 6, 7, 8) qui est le siège d'un champ impulsionnel induit est matérialisée par une paire d'éléments (U, O) de génération de champ électrique, lesdits éléments (U, O) étant extérieurs à la chambre (1) et étant espaces dans une direction longitudinale de celle-ci, un premier élément (U) d'une paire étant soumis à des impulsions présentant des crêtes de tension négative de l'ordre de quelques dizaines de volts à une fréquence de 1 à quelques kHz, et le deuxième élément (O) d'une paire étant soumis à un potentiel constant voisin de zéro Volt.

2. Procédé selon la revendication 1, caractérisé en ce que le premier élément (U) est soumis à des impulsions de tension alternativement positives et négatives, à une fréquence de quelques kHz, l'amplitude des impulsions négatives étant de quelques dizaines de volts, et celle des impulsions positives étant de quelques volts, de façon à assurer l'autonettoyage de la chambre.

3. Procédé selon la revendication 1 ou 2, caractérisé en ce que le liquide circule dans une chambre en matière électriquement non conductrice, ou bien ne pouvant se comporter en cage de Faraday lorsqu'elle est reliée à une installation naturellement mise à la terre.

4. Procédé selon une des revendications précédentes, caractérisé en ce qu'au moins une zone est le siège d'un champ magnétique perpendiculaire à la vitesse d'écoulement du liquide.

## Claims

1. A physical method of treating liquid media liable to produce encrusting deposits, wherein a liquid flows in at least two consecutive regions (2, 3, 4, 5, 6, 7, 8, 9) of a chamber (1), at least one region (2, 3, 4, 5, 6, 7, 8) being the location of an induced pulsed field, **characterised in that** at least one said region (2, 3, 4, 5, 6, 7, 8) which is the location of an induced pulsed field is delimited by a pair of electric field generation members (U, O), the said members (U, O) being located outside the chamber (1) and spaced in the longitudinal direction of the said chamber, a first member (U) of a pair being subjected to pulses having peaks of negative voltage in the order of several tens of volts at a frequency of 1 to several kHz, and the second member (O) of a pair being subjected to a constant potential of close to zero volts.

2. A process in accordance with claim 1, **characterised in that** the first member (U) is subjected to pulses of voltage which are alternately positive and negative, at a frequency of several kHz, the amplitude of the negative pulses being several tens of volts and that of the positive pulses being a few volts, in such a manner to ensure that the chamber is self-cleaning.

3. A process in accordance with claim 1 or 2, **characterized in that** the liquid flows in a chamber made of material which is not an electrical conductor, or cannot behave as a Faraday cage when connected to a naturally earthed installation.

4. A process in accordance with one of the preceding claims, **characterized in that** at least one region is the location of a magnetic field perpendicular to the velocity of flow of the liquid.

## Patentansprüche

1. Physikalisches Verfahren zur Behandlung von Flüssigkeiten, die für die Ausbildung von Ablagerungen geeignet sind, nach welchem Verfahren eine Flüssigkeit in zwei Zonen (2, 3, 4, 5, 6, 7, 8, 9) zirkuliert, die an eine Kammer (1) angeschlossen sind, wobei in mindestens einer Zone (2, 3, 4, 5, 6, 7, 8) ein induziertes Impulsfeld angeordnet ist, dadurch gekennzeichnet, daß wenigstens eine dieser Zonen (2, 3, 4, 5, 6, 7, 8), in dem sich ein induziertes Impulsfeld befindet, durch ein Paar von Elementen (U, O) gebildet ist, die elektrische Felder erzeugen, wobei die Elemente (U, O) außen an der Kammer (1) angebracht und in einer Richtung entlang der Kammer räumlich getrennt angeordnet sind, ein erstes Element (U) eines Paares Impulsstößen unterworfen wird, die die Spitzenwerte der Negativspannung darstellen, die einige Dutzend Volt mit einer Frequenz von 1 kHz bis zu einigen kHz beträgt, und wobei das zweite Element (O) eines Paares einer konstanten Spannung in der Nähe von Null Volt unterworfen ist.

2. Verfahren nach Anspruch 1, dadurch gekennzeichnet, daß das erste Element (U) abwechselnd positiven und negativen Spannungsstößen mit einer Frequenz von einigen kHz unterworfen wird, wobei die Amplitude der negativen Spannungsstöße einige Dutzend Volt beträgt und die der positiven Spannungsstöße einige Volt, so daß die Selbstreinigung der Kammer gewährleistet ist.

3. Verfahren nach Anspruch 1 oder 2, dadurch gekennzeichnet, daß die Flüssigkeit in einer Kammer zirkuliert, die aus elektrisch nicht leitendem Material besteht, oder die nicht als Faradayscher Käfig wirken kann, sobald sie mit einer an Masse angeschlossenen Einrichtung verbunden ist.

4. Verfahren nach einem der vorhergehenden Ansprüche, dadurch gekennzeichnet, daß sich in mindestens einer Zone ein Magnetfeld befindet, das senkrecht zu der Fließgeschwindigkeit der Flüssigkeit steht.
